# EUROPEAN PATENT APPLICATION

(11) **EP 4 769 193 A1**
(43) Date of publication of application: **01.07.2026**
(21) Application number: 24855774.6
(22) Date of filing: 19.08.2024
(51) Int. Cl.: G06F 21/62

(54) **COMPLIANCE TESTING METHOD AND APPARATUS, ELECTRONIC DEVICE AND COMPUTER STORAGE MEDIUM**

(30) Priority: 22.08.2023 CN 202311065166
(71) Applicant: Shenzhen TCL New Technology Co., Ltd, Shenzhen, Guangdong 518052 (CN)
(72) Inventor: HONG, Zhipen, Shenzhen, Guangdong 518052 (CN)
(74) Representative: Murgitroyd & Company
(86) International application number: PCT/CN2024/113061
(87) International publication number: WO 2025/040051

(57) **Abstract**

The embodiments of the present application disclose a compliance testing method, comprising: in response to an operation of the current user for confirming a displayed field, acquiring current user information corresponding to the current user; acquiring location information of the current user and, by means of a rule engine, determining laws and regulations corresponding to the location information; and, by means of the rule engine and on the basis of the laws and regulations corresponding to the location information, performing a compliance test on the current user information to obtain a compliance test result. The accuracy of compliance testing is improved.

## Description

This application claims the priority of Chinese Patent Application No. 202311065166.7, entitled "COMPLIANCE TESTING METHOD AND APPARATUS, ELECTRONIC DEVICE AND COMPUTER STORAGE MEDIUM", filed on August 22, 2023, the disclosure of which is incorporated herein by reference in its entirety.

### FIELD OF THE DISCLOSURE

The present disclosure relates to the field of computer technology, and in particular relates to a compliance testing method, an apparatus, an electronic device, and a computer-readable storage medium.

### BACKGROUND

With the development of science and technology, application programs collect an increasing amount of user information. In order to avoid leakage of user information, various countries have promulgated laws and regulations. Such laws and regulations define user information that application programs are permitted to store, so as to protect user information.

### Technical Problem

At present, privacy policy documents of application programs are automatically detected according to laws and regulations, so as to determine whether the application programs are compliant. However, some application programs do not actually collect user information in accordance with the privacy policy documents. As a result, compliance testing methods that only detect privacy policy documents may determine non-compliant application programs to be compliant, resulting in low accuracy.

### SUMMARY

Embodiments of the present disclosure provide a compliance testing method, an apparatus, an electronic device, and a computer-readable storage medium, which can solve the technical problem of low accuracy in existing compliance testing methods.

An embodiment of the present disclosure provides a compliance testing method, comprising:
obtaining a display instruction, and determining fields corresponding to user information to be obtained by a page corresponding to the display instruction;
displaying the fields, and in response to a confirmation operation of a current user on the displayed fields, obtaining current user information corresponding to the current user;
obtaining location information of the current user, and determining, through a rule engine, laws and regulations corresponding to the location information;
through the rule engine, performing compliance test on the current user information according to the laws and regulations corresponding to the location information, to obtain a compliance testing result; and
when the compliance testing result is compliant, storing the current user information.

Correspondingly, an embodiment of the present disclosure further provides a compliance testing apparatus, comprising:
an obtaining module, configured to obtain a display instruction, and determine fields corresponding to user information to be obtained by a page corresponding to the display instruction;
a display module, configured to display the fields, and in response to a confirmation operation of a current user on the displayed fields, obtain current user information corresponding to the current user;
a determining module, configured to obtain location information of the current user, and determine, through a rule engine, laws and regulations corresponding to the location information;
a testing module, configured to, through the rule engine, perform compliance test on the current user information according to the laws and regulations corresponding to the location information, to obtain a compliance testing result; and
a storage module, configured to, when the compliance testing result is compliant, store the current user information.

In addition, an embodiment of the present disclosure further provides an electronic device, comprising a processor and a memory, wherein the memory stores a computer program, and the processor is configured to run the computer program stored in the memory to implement the compliance testing method provided by the embodiments of the present disclosure.

In addition, an embodiment of the present disclosure further provides a computer-readable storage medium. The computer-readable storage medium stores computer program which is adapted to be loaded by a processor, so as to perform any one of the compliance testing methods provided by the embodiments of the present disclosure.

In addition, an embodiment of the present disclosure further provides a computer program product comprising a computer program. The computer program executable by a processor to implement any one of the compliance testing methods provided by the embodiments of the present disclosure.

### Advantageous effects

In the embodiments of the present disclosure, a display instruction is obtained, and fields corresponding to user information to be obtained by a page corresponding to the display instruction are determined; the fields are displayed, and in response to a confirmation operation of a current user on the displayed fields, current user information corresponding to the current user is obtained; location information of the current user is obtained, and laws and regulations corresponding to the location information are determined through a rule engine; through the rule engine, compliance test is performed on the current user information according to the laws and regulations corresponding to the location information, to obtain a compliance testing result; and when the compliance testing result is compliant, the current user information is stored. Accordingly, compliance test is performed on the current user information, thereby improving the accuracy of the obtained compliance testing result. Moreover, compliance test is performed on the current user information during collection of the current user information, and storage is performed only when the current user information is compliant, thereby realizing filtered storage of the current user information and avoiding non-compliance of an application program in which the page corresponding to the display instruction is located.

### BRIEF DESCRIPTION OF THE DRAWINGS

In order to more clearly illustrate the technical solutions in the embodiments of the present disclosure, the drawings required to be used in the description of the embodiments will be briefly introduced below. Obviously, the drawings described below are only some embodiments of the present disclosure, and for a person skilled in the art, other drawings may also be obtained based on these drawings without creative effort.
FIG. 1 is a schematic flowchart of a compliance testing method provided by an embodiment of the present disclosure.
FIG. 2 is a schematic diagram of a query process provided by an embodiment of the present disclosure.
FIG. 3 is a schematic diagram of another compliance detection provided by an embodiment of the present disclosure.
FIG. 4 is a schematic structural diagram of a compliance testing apparatus provided by an embodiment of the present disclosure.
FIG. 5 is a block diagram of an electronic device according to an embodiment of the present disclosure.

### DETAILED DESCRIPTION OF EMBODIMENTS

The technical solutions in the embodiments of the present disclosure will be clearly and completely described below with reference to the accompanying drawings. Obviously, the described embodiments are only part of the embodiments of the present disclosure, rather than all of the embodiments. Based on the embodiments of the present disclosure, all other embodiments obtained by a person skilled in the art without creative effort shall fall within the protection scope of the present disclosure.

The embodiments of the present disclosure provide a compliance testing method, an apparatus, an electronic device, and a computer-readable storage medium. The compliance testing apparatus may be integrated in an electronic device, and the electronic device may be a server or a terminal, among other devices.

The server may be an independent physical server, or may be a server cluster or a distributed system composed of a plurality of physical servers. The server may also be a cloud server providing basic cloud computing services such as cloud services, cloud databases, cloud computing, cloud functions, cloud storage, network services, cloud communications, middleware services, domain name services, security services, network acceleration services (Content Delivery Network, CDN), as well as big data and artificial intelligence platforms.

The terminal may be a smart phone, a tablet computer, a notebook computer, a desktop computer, a smart speaker, a smart watch, or the like, but is not limited thereto.

The terminal and the server may be directly or indirectly connected through wired or wireless communication, and no limitation is imposed in the present disclosure.

In addition, in the embodiments of the present disclosure, the term "a plurality of" refers to two or more. The terms "first" and "second" are used for distinction in description, and shall not be construed as indicating relative importance.

Detailed descriptions are provided below respectively. It should be noted that the description order of the following embodiments does not constitute a limitation on a preferred order of the embodiments.

In the present embodiment, description is provided from the perspective of the compliance testing apparatus. For convenience of explaining the compliance testing method of the present disclosure, the following description is provided by taking the compliance testing apparatus as being integrated in a terminal. That is, the terminal is taken as an execution device for detailed description.

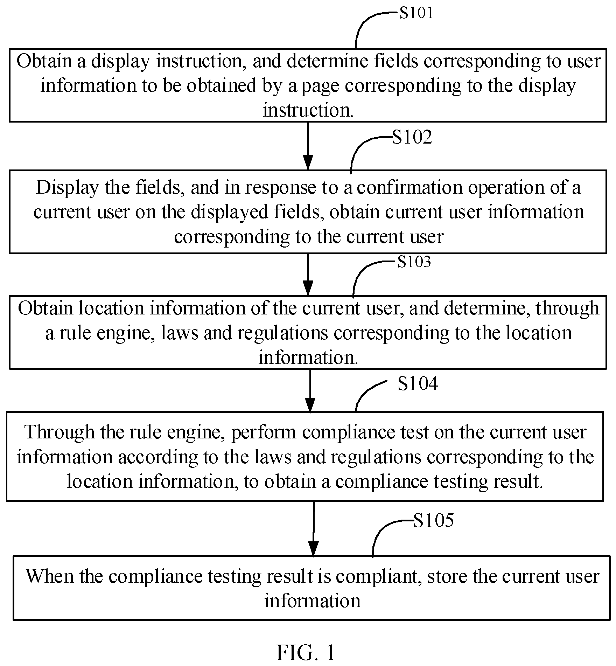

Refer to FIG. 1 illustrating a c flowchart of a compliance testing method provided by an embodiment of the present disclosure. The compliance testing method may comprise steps S101-S105.

S101: obtaining a display instruction, and determining fields corresponding to user information to be obtained by a page corresponding to the display instruction.

The terminal may respond to a triggering operation of a user to obtain the display instruction. The page corresponding to the display instruction refers to a page displayed by the terminal in response to the triggering operation of the user.

The fields corresponding to user information to be obtained by the page corresponding to the display instruction refer to attributes used for recording user information. For example, the fields corresponding to user information may refer to age, gender, or educational background.

The user information to be obtained by the page corresponding to the display instruction may be set according to actual requirements. For example, the user information to be obtained by the page corresponding to the display instruction may be an age of a user or a gender of a user. The embodiments of the present disclosure are not limited thereto.

S102: displaying the fields, and in response to a confirmation operation of a current user on the displayed fields, obtaining current user information corresponding to the current user.

The current user refers to a user using the terminal. A form in which the terminal displays the fields may be set according to actual requirements. For example, the fields may be displayed in a form of a table or a pop-up window. The embodiments of the present disclosure are not limited thereto.

After the terminal displays the fields, the current user may input specific information corresponding to the fields and confirm the input. Accordingly, the terminal may respond to the confirmation operation of the current user on the displayed fields to obtain the current user information corresponding to the current user.

The manner in which the current user inputs the current user information may be set according to actual requirements. For example, the current user may input the current user information through manual input or voice input. The embodiments of the present disclosure are not limited thereto.

In the embodiments of the present disclosure, when the page corresponding to the display instruction is to be displayed, only user information required by the page corresponding to the display instruction is obtained, thereby realizing on-demand and step-by-step collection of user information rather than directly collecting all user information of the user, and reducing occurrence of a situation in which collected user information does not comply with laws and regulations.

In some embodiments, displaying the fields, and in response to the confirmation operation of the current user on the displayed fields, obtaining the current user information corresponding to the current user, comprise:
detecting, according to the laws and regulations corresponding to the location information, whether user information corresponding to the fields is compliant;
when the user information corresponding to the fields is not compliant, updating the fields according to the laws and regulations corresponding to the location information to obtain target fields;
displaying the target fields; and
in response to a confirmation operation of the current user on the displayed target fields, obtaining the current user information corresponding to the current user.

Since laws and regulations in different regions may be different, compliance results may also be different. For example, under laws and regulations of a Q 1 region, A user information is permitted to be stored, while under laws and regulations of a Q2 region, A user information is not permitted to be stored but B user information is permitted to be stored. When the current user moves from the Q1 region to the Q2 region, the A user information becomes non-compliant. In this case, the terminal may update fields corresponding to the A user information to target fields corresponding to the B user information, so as to collect and store the B user information, thereby dynamically adjusting user information to be collected according to laws and regulations and avoiding storage of non-compliant user information.

S103: obtaining location information of the current user, and determining, through a rule engine, laws and regulations corresponding to the location information.

A type of the rule engine may be selected according to actual requirements. For example, the rule engine may be a Drools rule engine or a Groovy rule engine. The embodiments of the present disclosure are not limited thereto.

Laws and regulations corresponding to each region may be pre-stored in the rule engine. After the terminal obtains the location information of the current user, laws and regulations corresponding to a region matching the location information are used as the laws and regulations corresponding to the location information.

The rule engine may be deployed in the terminal, or the rule engine may be deployed in a server. When the rule engine is deployed in the server, the rule engine may be invoked by a plurality of terminals. In this case, the rule engine is a general-purpose platform, which may be used to detect whether user information collected and stored by one application program is compliant, and may also be used to detect whether user information collected and stored by a plurality of application programs is compliant.

For example, the rule engine may be used to detect whether user information collected and stored by an a1 application program and user information collected and stored by an a2 application program in the terminal are compliant.

When the rule engine is used to detect whether user information collected and stored by a plurality of application programs is compliant, types of the plurality of application programs may be the same or different. For example, the plurality of application programs may include application programs of a game type and application programs of a video type.

Optionally, the terminal may obtain the location information of the current user while responding to the confirmation operation of the current user on the displayed fields to obtain the current user information corresponding to the current user. Alternatively, the terminal may obtain the location information of the current user after responding to the confirmation operation of the current user on the displayed fields to obtain the current user information corresponding to the current user. Alternatively, the terminal may obtain the location information of the current user before responding to the confirmation operation of the current user on the displayed fields to obtain the current user information corresponding to the current user. The embodiments of the present disclosure are not limited thereto.

S104: through the rule engine, performing compliance test on the current user information according to the laws and regulations corresponding to the location information, to obtain a compliance testing result.

After the terminal obtains the laws and regulations corresponding to the location information, the terminal may, through the rule engine, detect whether the current user information complies with the laws and regulations corresponding to the location information. When the current user information complies with the laws and regulations, the compliance testing result is compliant; and when the current user information does not comply with the laws and regulations, the compliance testing result is non-compliant.

Performing compliance test on the current user information according to the laws and regulations corresponding to the location information through the rule engine may be understood as a process of matching the current user information with the laws and regulations corresponding to the location information. An implementation process thereof may be selected according to actual requirements. For example, the current user information may be stored as a fact object in a working memory, and a pattern matcher in the rule engine is used to match the laws and regulations corresponding to the location information with the fact object. The embodiments of the present disclosure are not limited thereto.

When the terminal dynamically adjusts the fields according to the laws and regulations corresponding to the location information in real time, step S104 and step S105 may be directly executed, or a determination step may be executed to determine whether step S104 and step S105 are to be executed. The determination step may include: determining whether the current user information is current user information corresponding to the fields or current user information corresponding to the target fields. When the current user information is the current user information corresponding to the fields, step S104 and step S105 are executed; and when the current user information is the current user information corresponding to the target fields, step S104 and step S105 are not executed.

When the rule engine is used to detect whether information collected and stored by a plurality of application programs is compliant, in order to rapidly obtain a compliance testing result, the terminal may classify and store laws and regulations of each region according to application program types. In this case, a process of performing, through the rule engine, compliance test on the current user information according to the laws and regulations corresponding to the location information to obtain the compliance testing result may comprise:
through the rule engine, obtaining a target type of an application program in which the page corresponding to the display instruction is located;
screening, from the laws and regulations corresponding to the location information, laws and regulations matching the target type, to obtain target laws and regulations;
performing compliance test on the current user information according to the target laws and regulations, to obtain the compliance testing result.

For example, when the target type is a game type and the current user information is an age of the current user, laws and regulations matching the game type are laws and regulations L1. As another example, when the target type is a video type and the current user information is an age of the current user, laws and regulations matching the video type are laws and regulations L2.

In the embodiments of the present disclosure, through the rule engine, the target type of the application program in which the page corresponding to the display instruction is located is obtained; laws and regulations matching the target type are screened from the laws and regulations corresponding to the location information to obtain target laws and regulations; and compliance test is performed on the current user information according to the target laws and regulations to obtain the compliance testing result. Accordingly, compliance test is performed only based on the target laws and regulations rather than all laws and regulations corresponding to the location information, thereby improving a speed of obtaining the compliance testing result.

In some embodiments, before determining, through the rule engine, the laws and regulations corresponding to the location information, the method further comprises:
obtaining laws and regulations corresponding to at least one region;
through the rule engine, analyzing the laws and regulations to obtain laws and regulations decision trees corresponding to the at least one region;
wherein determining, through the rule engine, the laws and regulations corresponding to the location information, and performing, through the rule engine, compliance test on the current user information according to the laws and regulations corresponding to the location information to obtain the compliance testing result, comprise:
determining, through the rule engine, a laws and regulations decision tree corresponding to the location information;
through the rule engine, performing compliance test on the current user information according to the laws and regulations decision tree corresponding to the location information, to obtain the compliance testing result.

In the embodiments of the present disclosure, laws and regulations corresponding to at least one region are obtained, the laws and regulations are analyzed through the rule engine to obtain laws and regulations decision trees corresponding to the at least one region, a laws and regulations decision tree corresponding to the location information is determined through the rule engine, and compliance test is performed on the current user information according to the laws and regulations decision tree corresponding to the location information to obtain the compliance testing result. Accordingly, laws and regulations are organized into decision trees, thereby improving a speed of performing compliance test on the current user information.

One location information may correspond to one decision tree, that is, a plurality of laws and regulations of one region correspond to one decision tree. Alternatively, one law or regulation may correspond to one decision tree. When one law or regulation corresponds to one decision tree, determining, through the rule engine, the laws and regulations decision tree corresponding to the location information, and performing, through the rule engine, compliance test on the current user information according to the laws and regulations decision tree corresponding to the location information to obtain the compliance testing result, comprise:
determining, through the rule engine, at least two laws and regulations decision trees corresponding to the location information;
determining a type corresponding to the fields;
screening, from the at least two laws and regulations decision trees, laws and regulations decision trees matching the type, to obtain a target laws and regulations decision tree;
performing compliance test on the current user information according to the target laws and regulations decision tree, to obtain the compliance testing result.

The type corresponding to the fields may be a root node of a laws and regulations decision tree. The type corresponding to the fields may refer to a type of user information corresponding to the fields. For example, when the user information is an age A and a time T1, a type of the fields is age, and a root node of the target laws and regulations decision tree is age. As another example, when the user information is gender and a time T2, a type of the fields is gender, and a root node of the target laws and regulations decision tree is gender.

In the embodiments of the present disclosure, one law or regulation corresponds to one decision tree. At least two laws and regulations decision trees corresponding to the location information are determined through the rule engine; a type corresponding to the fields is determined; from the at least two laws and regulations decision trees, laws and regulations decision trees matching the type are screened to obtain a target laws and regulations decision tree; and compliance test is performed on the current user information according to the target laws and regulations decision tree to obtain a compliance testing result. Accordingly, when there are a large number of laws and regulations, the target laws and regulations decision tree can be rapidly obtained, thereby improving a speed of obtaining the compliance testing result based on the target laws and regulations decision tree.

Optionally, since there may be a plurality of fields corresponding to user information required by the page corresponding to the display instruction, a type corresponding to the fields may be determined according to priorities of the fields. That is, a root node of the laws and regulations decision tree is determined according to a plurality of sub user information to be verified in the current user information.

For example, when the fields include age and a mobile phone number, and a priority of age is higher than a priority of the mobile phone number, age is used as the type corresponding to the fields. As another example, when the fields include an identification number and time, and a priority of the identification number is higher than a priority of the mobile phone number, the identification number is used as the type corresponding to the fields.

In some other embodiments, performing compliance test on the current user information according to the target laws and regulations decision tree to obtain the compliance testing result comprises:
through the rule engine, splitting the current user information to obtain a plurality of sub user information to be verified;
determining a target position corresponding to each sub user information to be verified in the target laws and regulations decision tree;
finding, according to the target position in the target laws and regulations decision tree, laws and regulations content corresponding to each sub user information to be verified; and
performing compliance test on the sub user information to be verified according to the laws and regulations content corresponding to each sub user information to be verified, to obtain the compliance testing result.

Since a plurality of laws and regulations content exist in one law or regulation, when generating a laws and regulations decision tree, one law or regulation may be stored in one sub-node of the laws and regulations decision tree. After the current user information is obtained, the current user information is split to obtain a plurality of sub user information to be verified; a target position corresponding to each sub user information to be verified in the target laws and regulations decision tree is determined; laws and regulations content corresponding to each sub user information to be verified is found according to the target position in the target laws and regulations decision tree; and compliance test is performed on the sub user information to be verified according to the laws and regulations content corresponding to each sub user information to be verified to obtain the compliance testing result. Accordingly, it is unnecessary to traverse the entire target laws and regulations decision tree when performing compliance test on each sub user information to be verified, thereby improving a speed of obtaining the compliance testing result.

For example, when the current user information includes age and time, a root node of the target laws and regulations decision tree is age, a first sub-node is "greater than eighteen years old", and a second sub-node is "bachelor's degree or above". When the current user information is graduate student A years old, the sub user information to be verified includes A years old and graduate student. A target position corresponding to A years old is the first sub-node, and a target position corresponding to graduate student is the second sub-node. Laws and regulations content corresponding to A years old is "greater than eighteen years old", and laws and regulations content corresponding to graduate student is "bachelor's degree or above". Since A years old is greater than eighteen years old and graduate student corresponds to an educational level of bachelor's degree or above, the compliance testing result of the current user information is compliant.

Optionally, the terminal may first store, in the rule engine, a node type corresponding to each sub-node in the laws and regulations decision tree. The node type corresponding to each sub-node may be determined according to laws and regulations content corresponding to each sub-node. For example, when a sub-node is "greater than eighteen years old", a node type corresponding to the sub-node is age; and when a sub-node is "bachelor's degree or above", a node type corresponding to the sub-node is educational background.

Then, after obtaining the sub user information to be verified, the terminal, through the rule engine, uses a sub-node corresponding to a node type matching a type of the sub user information to be verified as the target position corresponding to the sub user information to be verified.

For example, when the sub user information to be verified is A years old, a type of the sub user information to be verified is age. Since a node type of the first sub-node is also age, the target position corresponding to the sub user information to be verified is the first sub-node.

S105: when the compliance testing result is compliant, storing the current user information.

When the compliance testing result is compliant, the current user information is stored; and when the current user information is non-compliant, the current user information is not stored. Accordingly, compliance test is performed on the current user information during collection of the current user information, and storage is performed only when the current user information is compliant, thereby realizing filtered storage of the current user information and avoiding non-compliance of an application program in which the page corresponding to the display instruction is located.

When storing the current user information, the current user information may be directly stored. Alternatively, in order to avoid leakage of user information and ensure security of the user information, the current user information may be encrypted to obtain encrypted current user information, and the encrypted current user information is then stored.

A method for encrypting the current user information may be set according to actual requirements. For example, a symmetric encryption algorithm or an asymmetric encryption algorithm may be used to encrypt the current user information. The embodiments of the present disclosure are not limited thereto.

Optionally, the current user information may be stored into a database.

After the current user information is stored into the database, business staff of the application program in which the page corresponding to the display instruction is located may query the current user information in the database.

Optionally, field query authority of each business staff may be limited. When a query instruction of business staff is obtained, only sub user information corresponding to fields within the field query authority of the business staff in the current user information is displayed, thereby finely controlling query authority of the current user information and reducing a risk of leakage of the current user information.

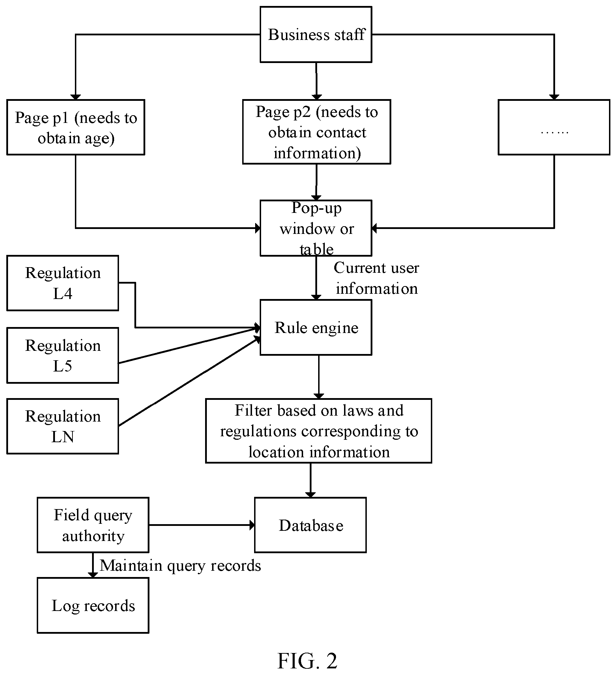

Optionally, query records of each business staff may also be stored in log records, so as to facilitate operation tracing. Accordingly, when information leakage occurs, a cause of the information leakage can be rapidly determined. For example, as shown in FIG. 2.

In some embodiments, after storing the current user information when the compliance testing result is compliant, the method further comprises:
obtaining change information of laws and regulations;
through the rule engine, performing compliance test on the stored current user information according to the change information; and
when the stored current user information is non-compliant, deleting the stored current user information.

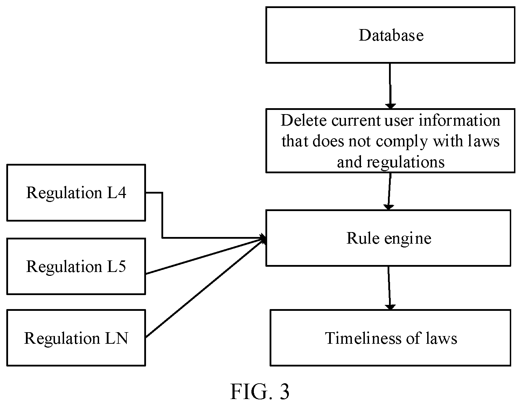

Laws and regulations are time-sensitive. At a time T1, a compliance testing result of the current user information may be compliant, while at a time T2, due to changes in laws and regulations, the compliance testing result of the current user information may become non-compliant. Therefore, in the embodiments of the present disclosure, after storing the current user information when the compliance testing result is compliant, change information of laws and regulations is obtained; compliance test is performed on the stored current user information according to the change information through the rule engine; and when the stored current user information is non-compliant, the stored current user information is deleted, thereby further reducing occurrence of non-compliance of an application program in which the page corresponding to the display instruction is located. For example, as shown in FIG. 3.

As can be seen from the above, in the embodiments of the present disclosure, a display instruction is obtained, and fields corresponding to user information to be obtained by a page corresponding to the display instruction are determined; the fields are displayed, and in response to a confirmation operation of a current user on the displayed fields, current user information corresponding to the current user is obtained; location information of the current user is obtained, and laws and regulations corresponding to the location information are determined through a rule engine; through the rule engine, compliance test is performed on the current user information according to the laws and regulations corresponding to the location information to obtain a compliance testing result; and when the compliance testing result is compliant, the current user information is stored. Accordingly, compliance test of the current user information is realized, accuracy of the obtained compliance testing result is improved, and compliance test is performed on the current user information during collection thereof, such that storage is performed only when the current user information is compliant. Thus, filtered storage of the current user information is realized, and non-compliance of an application program in which the page corresponding to the display instruction is located is avoided.

In order to facilitate better implementation of the compliance testing method provided by the embodiments of the present disclosure, the embodiments of the present disclosure further provide an apparatus based on the above compliance testing method. Meanings of terms used therein are the same as those in the above compliance testing method, and specific implementation details may refer to the descriptions in the method embodiments.

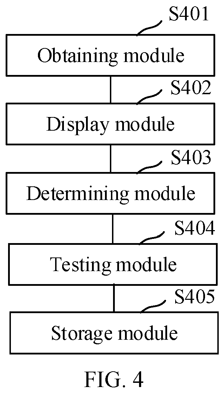

For example, as shown in FIG. 4, the compliance testing apparatus may comprise:
an obtaining module 401, configured to obtain a display instruction, and determine fields corresponding to user information to be obtained by a page corresponding to the display instruction;
a display module 402, configured to display the fields, and in response to a confirmation operation of a current user on the displayed fields, obtain current user information corresponding to the current user;
a determining module 403, configured to obtain location information of the current user, and determine, through a rule engine, laws and regulations corresponding to the location information;
a testing module 404, configured to, through the rule engine, perform compliance test on the current user information according to the laws and regulations corresponding to the location information, to obtain a compliance testing result; and
a storage module 405, configured to, when the compliance testing result is compliant, store the current user information.

Optionally, the compliance testing apparatus further comprises:
an analysis module, configured to perform:
obtaining laws and regulations corresponding to at least one region; and
through the rule engine, analyzing the laws and regulations to obtain laws and regulations decision trees corresponding to the at least one region.

Correspondingly, the testing module 404 is specifically configured to perform:
determining, through the rule engine, a laws and regulations decision tree corresponding to the location information; and
through the rule engine, performing compliance test on the current user information according to the laws and regulations decision tree corresponding to the location information, to obtain the compliance testing result.

Optionally, one law or regulation corresponds to one decision tree, and the testing module 404 is specifically configured to perform:
determining, through the rule engine, at least two laws and regulations decision trees corresponding to the location information;
determining a type corresponding to the fields;
screening, from the at least two laws and regulations decision trees, laws and regulations decision trees matching the type, to obtain a target laws and regulations decision tree;
performing compliance test on the current user information according to the target laws and regulations decision tree, to obtain the compliance testing result.

Optionally, the testing module 404 is specifically configured to perform:
through the rule engine, splitting the current user information to obtain a plurality of sub user information to be verified;
determining a target position corresponding to each sub user information to be verified in the target laws and regulations decision tree;
finding, according to the target position in the target laws and regulations decision tree, laws and regulations content corresponding to each sub user information to be verified;
performing compliance test on the sub user information to be verified according to the laws and regulations content corresponding to each sub user information to be verified, to obtain the compliance testing result.

Optionally, the display module 402 is specifically configured to perform:
detecting, according to the laws and regulations corresponding to the location information, whether user information corresponding to the fields is compliant;
when the user information corresponding to the fields is not compliant, updating the fields according to the laws and regulations corresponding to the location information to obtain target fields;
displaying the target fields; and
in response to a confirmation operation of the current user on the displayed target fields, obtaining the current user information corresponding to the current user.

Optionally, the storage module 405 is specifically configured to perform:
when the compliance testing result is compliant, encrypting the current user information to obtain encrypted current user information; and
storing the encrypted current user information.

Optionally, the compliance testing apparatus further comprises:
an update module, configured to perform:
obtaining change information of laws and regulations;
through the rule engine, performing compliance test on the stored current user information according to the change information; and
when the stored current user information is non-compliant, deleting the stored current user information.

In practical implementation, the above modules may be implemented as independent entities, or may be combined in any manner and implemented as one or more entities. Specific implementation manners and corresponding advantageous effects of the above modules may refer to the foregoing method embodiments, and details are not repeated herein.

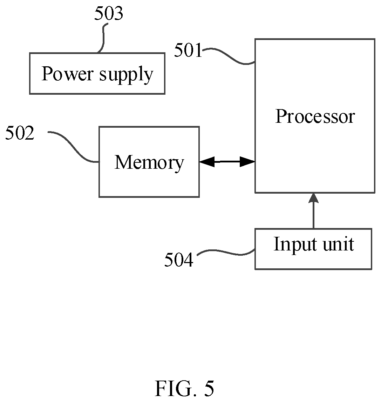

The embodiments of the present disclosure further provide an electronic device. The electronic device may be a server or a terminal, or the like. As shown in FIG. 5, FIG. 5 is a schematic structural diagram of an electronic device involved in the embodiments of the present disclosure. Specifically:

The electronic device may include components such as a processor 501 having one or more processing cores, a memory 502 having one or more computer-readable storage media, a power supply 503, and an input unit 504. A person skilled in the art can understand that the electronic device structure shown in FIG. 5 does not constitute a limitation on the electronic device, and may include more or fewer components than those illustrated, or combine certain components, or adopt different component arrangements. Wherein:

The processor 501 is a control center of the electronic device, and connects various parts of the entire electronic device by using various interfaces and lines. By running or executing computer programs and/or modules stored in the memory 502, and by invoking data stored in the memory 502, the processor 501 executes various functions of the electronic device and processes data. Optionally, the processor 501 may include one or more processing cores. Preferably, the processor 501 may integrate an application processor and a modem processor, wherein the application processor mainly processes an operating system, a user interface, and application programs, and the modem processor mainly processes wireless communication. It should be understood that the modem processor may alternatively not be integrated into the processor 501.

The memory 502 may be used to store computer programs and modules. The processor 501 executes various functional applications and data processing by running the computer programs and modules stored in the memory 502. The memory 502 may mainly include a program storage area and a data storage area, wherein the program storage area may store an operating system, computer programs required for at least one function (such as a sound playback function, an image playback function, and the like), and the like; and the data storage area may store data created according to use of the electronic device, and the like. In addition, the memory 502 may include a highspeed random access memory, and may further include a non-volatile memory, such as at least one disk storage device, a flash memory device, or other non-volatile solid-state storage devices. Correspondingly, the memory 502 may further include a memory controller to provide the processor 501 with access to the memory 502.

The electronic device further includes a power supply 503 for supplying power to various components. Preferably, the power supply 503 may be logically connected to the processor 501 through a power management system, so as to implement functions such as charge management, discharge management, and power consumption management through the power management system. The power supply 503 may further include one or more direct current or alternating current power supplies, a recharging system, a power failure detection circuit, a power converter or inverter, a power status indicator, and any other components.

The electronic device may further include an input unit 504. The input unit 504 may be used to receive input numeric or character information, and generate keyboard, mouse, joystick, optical, or trackball signal input related to user settings and function control.

Although not shown, the electronic device may further include a display unit and the like, which are not described herein again. Specifically, in the present embodiment, the processor 501 of the electronic device loads executable files corresponding to one or more computer program processes into the memory 502 according to instructions, and runs the computer programs stored in the memory 502, so as to implement various functions, for example:
obtaining a display instruction, and determining fields corresponding to user information to be obtained by a page corresponding to the display instruction;
displaying the fields, and in response to a confirmation operation of a current user on the displayed fields, obtaining current user information corresponding to the current user;
obtaining location information of the current user, and determining, through a rule engine, laws and regulations corresponding to the location information;
through the rule engine, performing compliance test on the current user information according to the laws and regulations corresponding to the location information, to obtain a compliance testing result; and
when the compliance testing result is compliant, storing the current user information.

Specific implementation manners of the above operations and corresponding advantageous effects may refer to the detailed description of the compliance testing method above, and details are not repeated herein.

A person skilled in the art may understand that all or part of the steps in the various methods of the above embodiments may be implemented by computer programs, or implemented by controlling related hardware through computer programs. The computer programs may be stored in a computer-readable storage medium and loaded and executed by a processor.

Accordingly, the embodiments of the present disclosure further provide a computer-readable storage medium, in which a computer program is stored. The computer program can be loaded by a processor to execute steps of any one of the compliance testing methods provided by the embodiments of the present disclosure. For example, the computer program may execute the following steps:
obtaining a display instruction, and determining fields corresponding to user information to be obtained by a page corresponding to the display instruction;
displaying the fields, and in response to a confirmation operation of a current user on the displayed fields, obtaining current user information corresponding to the current user;
obtaining location information of the current user, and determining, through a rule engine, laws and regulations corresponding to the location information;
through the rule engine, performing compliance test on the current user information according to the laws and regulations corresponding to the location information, to obtain a compliance testing result; and
when the compliance testing result is compliant, storing the current user information.

Specific implementation manners of the above operations and corresponding advantageous effects may refer to the foregoing embodiments, and details are not repeated herein.

The computer-readable storage medium may include a read-only memory (ROM), a random access memory (RAM), a magnetic disk, or an optical disc, or the like.

Since the computer program stored in the computer-readable storage medium can execute steps of any one of the compliance testing methods provided by the embodiments of the present disclosure, any advantageous effects that can be achieved by the compliance testing methods provided by the embodiments of the present disclosure can also be achieved, as described in the foregoing embodiments, and details are not repeated herein.

According to one aspect of the present disclosure, a computer program product or a computer program is further provided. The computer program product or the computer program comprises computer instructions stored in a computer-readable storage medium. A processor of a computer device reads the computer instructions from the computer-readable storage medium and executes the computer instructions, such that the computer device performs the compliance testing method described above.

The compliance testing method, apparatus, electronic device, and computer-readable storage medium provided by the embodiments of the present disclosure have been described in detail above. Specific examples are used herein to explain the principles and implementation manners of the present disclosure. The descriptions of the above embodiments are only used to assist in understanding the methods of the present disclosure and the core ideas thereof. Meanwhile, for a person skilled in the art, various changes may be made in specific implementation manners and application scopes according to the ideas of the present disclosure. In summary, the contents of the present specification should not be construed as limiting the present disclosure.

## Claims

1. A compliance testing method, comprising:
obtaining a display instruction, and determining fields corresponding to user information to be obtained by a page corresponding to the display instruction;
displaying the fields, and in response to a confirmation operation of a current user on the displayed fields, obtaining current user information corresponding to the current user;
obtaining location information of the current user, and determining, through a rule engine, laws and regulations corresponding to the location information;
through the rule engine, performing compliance test on the current user information according to the laws and regulations corresponding to the location information, to obtain a compliance testing result; and
when the compliance testing result is compliant, storing the current user information.

2. The compliance testing method according to claim 1, wherein before determining, through the rule engine, the laws and regulations corresponding to the location information, the method further comprises:
obtaining laws and regulations corresponding to at least one region; and through the rule engine, analyzing the laws and regulations to obtain a laws and regulations decision tree corresponding to the at least one region.

3. The compliance testing method according to claim 2, wherein determining, through the rule engine, the laws and regulations corresponding to the location information, and performing, through the rule engine, compliance test on the current user information according to the laws and regulations corresponding to the location information, to obtain the compliance testing result, comprise:
determining, through the rule engine, the laws and regulations decision tree corresponding to the location information; and
through the rule engine, performing compliance test on the current user information according to the laws and regulations decision tree corresponding to the location information, to obtain the compliance testing result.

4. The compliance testing method according to claim 3, wherein one law or regulation corresponds to one decision tree, and determining, through the rule engine, the laws and regulations decision tree corresponding to the location information, and performing, through the rule engine, compliance test on the current user information according to the laws and regulations decision tree corresponding to the location information, to obtain the compliance testing result, comprise:
determining, through the rule engine, at least two laws and regulations decision trees corresponding to the location information;
determining a type corresponding to the fields;
screening, from the at least two laws and regulations decision trees, laws and regulations decision trees matching the type, to obtain a target laws and regulations decision tree; and
performing compliance test on the current user information according to the target laws and regulations decision tree, to obtain the compliance testing result.

5. The compliance testing method according to claim 4, wherein performing compliance test on the current user information according to the target laws and regulations decision tree, to obtain the compliance testing result, comprises:
through the rule engine, splitting the current user information to obtain a plurality of sub user information to be verified;
determining a target position corresponding to each sub user information to be verified in the target laws and regulations decision tree;
finding, according to the target position in the target laws and regulations decision tree, laws and regulations content corresponding to each sub user information to be verified; and
performing compliance test on the sub user information to be verified according to the laws and regulations content corresponding to each sub user information to be verified, to obtain the compliance testing result.

6. The compliance testing method according to claim 1, wherein displaying the fields, and in response to the confirmation operation of the current user on the displayed fields, obtaining the current user information corresponding to the current user, comprise:
detecting, according to the laws and regulations corresponding to the location information, whether user information corresponding to the fields is compliant;
when the user information corresponding to the fields is not compliant, updating the fields according to the laws and regulations corresponding to the location information to obtain target fields;
displaying the target fields; and
in response to a confirmation operation of the current user on the displayed target fields, obtaining the current user information corresponding to the current user.

7. The compliance testing method according to claim 1, wherein when the compliance testing result is compliant, storing the current user information comprises:
when the compliance testing result is compliant, encrypting the current user information to obtain encrypted current user information; and
storing the encrypted current user information.

8. The compliance testing method according to any one of claims 1 to 7, wherein after storing the current user information when the compliance testing result is compliant, the method further comprises:
obtaining change information of the laws and regulations;
through the rule engine, performing compliance test on the stored current user information according to the change information; and
when the stored current user information is not compliant, deleting the stored current user information.

9. The compliance testing method according to claim 1, wherein obtaining the current user information corresponding to the current user comprises:
only obtaining user information required by the page corresponding to the display instruction.

10. The compliance testing method according to claim 1, wherein the method further comprises:
when the rule engine is used to detect whether user information collected and stored by a plurality of applications is compliant, types of the plurality of applications are the same or different.

11. The compliance testing method according to claim 1, wherein performing, through the rule engine, compliance test on the current user information according to the laws and regulations corresponding to the location information, to obtain the compliance testing result, comprises:
through the rule engine, obtaining a target type of an application in which the page corresponding to the display instruction is located;
screening, from the laws and regulations corresponding to the location information, laws and regulations matching the target type, to obtain target laws and regulations; and
performing compliance test on the current user information according to the target laws and regulations, to obtain the compliance testing result.

12. The compliance testing method according to claim 5, wherein determining the target position corresponding to each sub user information to be verified in the target laws and regulations decision tree comprises:
storing, in the rule engine, a node type corresponding to each sub-node in the laws and regulations decision tree, wherein the node type corresponding to each sub-node is determined according to laws and regulations content corresponding to each sub-node; and
after obtaining the sub user information to be verified, through the rule engine, using a sub-node corresponding to a node type matching a type of the sub user information to be verified as the target position corresponding to the sub user information to be verified.

13. The compliance testing method according to claim 1, wherein after storing the current user information when the compliance testing result is compliant, the method further comprises:
storing the current user information into a database; and when a query instruction of a business staff is obtained, only displaying sub user information corresponding to fields within field query authority of the business staff in the current user information.

14. A compliance testing apparatus, comprising:
an obtaining module, configured to obtain a display instruction, and determine fields corresponding to user information to be obtained by a page corresponding to the display instruction;
a display module, configured to display the fields, and in response to a confirmation operation of a current user on the displayed fields, obtain current user information corresponding to the current user;
a determining module, configured to obtain location information of the current user, and determine, through a rule engine, laws and regulations corresponding to the location information;
a testing module, configured to, through the rule engine, perform compliance test on the current user information according to the laws and regulations corresponding to the location information, to obtain a compliance testing result; and
a storage module, configured to, when the compliance testing result is compliant, store the current user information.

15. The compliance testing apparatus according to claim 14, wherein the testing module comprises:
obtaining laws and regulations corresponding to at least one region; and
through the rule engine, analyzing the laws and regulations to obtain a laws and regulations decision tree corresponding to the at least one region.

16. The compliance testing apparatus according to claim 15, wherein the testing module is specifically configured to:
determine, through the rule engine, the laws and regulations decision tree corresponding to the location information; and
through the rule engine, perform compliance test on the current user information according to the laws and regulations decision tree corresponding to the location information, to obtain the compliance testing result.

17. The compliance testing apparatus according to claim 16, wherein one law or regulation corresponds to one decision tree, and the testing module is further specifically configured to:
determine, through the rule engine, at least two laws and regulations decision trees corresponding to the location information;
determine a type corresponding to the fields;
screen, from the at least two laws and regulations decision trees, laws and regulations decision trees matching the type, to obtain a target laws and regulations decision tree; and
perform compliance test on the current user information according to the target laws and regulations decision tree, to obtain the compliance testing result.

18. The compliance testing apparatus according to claim 17, wherein the testing module is further specifically configured to:
through the rule engine, split the current user information to obtain a plurality of sub user information to be verified;
determine a target position corresponding to each sub user information to be verified in the target laws and regulations decision tree;
find, according to the target position in the target laws and regulations decision tree, laws and regulations content corresponding to each sub user information to be verified; and
perform compliance test on the sub user information to be verified according to the laws and regulations content corresponding to each sub user information to be verified, to obtain the compliance testing result.

19. An electronic device, comprising a processor and a memory storing computer program executable by the processor to perform the compliance testing method according to any one of claims 1 to 13.

20. A computer-readable storage medium, storing computer program adapted to be loaded by a processor to perform the compliance testing method according to any one of claims 1 to 13.
